# EUROPÄISCHE PATENTSCHRIFT

(11) **EP 0 796 183 B1**
(45) Veröffentlichungstag und Bekanntmachung des Hinweises auf die Patenterteilung: **19.05.1999**
(21) Anmeldenummer: 95936509.9
(22) Anmeldetag: 17.10.1995
(51) Int. Cl.: B60S 1/34, B60S 1/52, B60S 1/40

(54) **KOPPELGLIED FÜR EINE SCHEIBENWISCHERANLAGE, INSBESONDERE EINES KRAFTFAHRZEUGES**
COUPLING MEMBER FOR A WINDSHIELD WIPER ASSEMBLY, ESPECIALLY ON A MOTOR VEHICLE
ELEMENT D'ACCOUPLEMENT POUR ESSUIE-GLACE, EN PARTICULIER CELUI D'UN VEHICULE

(30) Priorität: 20.12.1994 DE 4445417
(43) Veröffentlichungstag der Anmeldung: 24.09.1997
(73) Patentinhaber: ITT Automotive Europe GmbH, 60488 Frankfurt (DE)
(72) Erfinder: EDELE, Reinhard, D-74321 Bietigheim-Bissingen (DE); KRIZEK, Oldrich, D-74321 Bietigheim-Bissingen (DE); SCHMID, Eckhardt, D-74336 Brackenheim (DE)
(74) Vertreter: Dreiss, Fuhlendorf, Steimle & Becker
(86) Internationale Anmeldenummer: EP9504070
(87) Internationale Veröffentlichungsnummer: WO9619367

(56) Entgegenhaltungen:
- DE-A- 3 340 449
- DE-A- 3 917 483

## Beschreibung

Die Erfindung bezieht sich auf ein Koppelglied für eine Scheibenwischeranlage, insbesondere eines Kraftfahrzeuges, mit den Merkmalen des Oberbegriffs des Anspruchs 1.

Es sind Scheibenwischeranlagen für Kraftfahrzeuge bekannt, bei denen das Wischblatt im wesentlichen parallel zu sich selbst auf der zu wischenden Scheibe hin- und herbewegt wird. Bei derartigen Scheibenwischeranlagen ist neben einem auf einer pendelnd bewegbaren Wischerwelle befestigten Wischarm ein sog. Steuerarm auf einer karosseriefesten drehbaren Achse befestigt. Das freie Ende des Wischarmes und das freie Ende des Steuerarmes sind gelenkig mit einem Koppelglied verbunden, wobei die beiden Anlenkpunkte voneinander beabstandet sind. Der Steuerarm kann dabei annähernd parallel zu dem Wischarm ausgerichtet sein, so daß das Koppelglied den Wischarm und den Steuerarm zu einem verformbaren Parallelogramm ergänzt. Es ist auch möglich, daß der Steuerarm den Wischarm kreuzt. Das zu der Scheibenwischeranlage gehörende Wischblatt wird um eine quer zur Längsrichtung des Wischblattes verlaufende Achse schwenkbar an dem Koppelglied befestigt.

Aus der DE-A-39 17 483 ist ein solches Koppelglied bekannt, dessen Grundkörper als einstückiges Blechteil durch Stanzen und Biegen hergestellt ist. Von einem Rücken des Koppelgliedes sind zwei Seitenwangen nach unten, das heißt in Richtung auf die zu wischende Scheibe gebogen, so daß diese Seitenwangen in einem Abstand voneinander und parallel zueinander verlaufen. Dieser Bereich des Koppelgliedes mit den nach unten gebogenen Seitenwangen bildet somit eine Art Überfallbügel, zwischen dessen Seitenwangen der Wischblatt-Tragbügel anzuordnen ist. Die schwenkbare Befestigung des Wischblattes am Koppelglied erfolgt mittels eines speziellen Gewindebolzens, der durch fluchtende Bohrungen in den Seitenwangen des Überfallbügels sowie in den Seitenwangen des Wischblatt-Tragbügels gesteckt und mit einer Mutter gesichert wird.

Dieses bekannte Koppelglied hat den wesentlichen Nachteil, daß es nur im Zusammenhang mit den speziellen Wischblättern anwendbar ist, welche die erforderlichen Bohrungen in den Seitenwänden des Wischblatt-Tragbügels besitzen. Zum anderen ist der Gewindebolzen, welcher das Wischblatt schwenkbar an dem Koppelglied hält, großen Belastungen ausgesetzt. Deshalb ist es erforderlich, daß der Gewindebolzen aus hochwertigem Material mit entsprechender Festigkeit gefertigt ist, was entsprechend hohe Kosten verursacht. Es ist noch zu bemängeln, daß sich ein erforderlicher Austausch des Wischblattes als relativ umständlich erweist, und daß das Koppelglied aus Blech nach heutigem Verständnis nicht gerade einen ansehnlichen Anblick bietet. Letztendlich muß noch auf die latente Verletzungsgefahr bei Handhabungen in der Nähe des relativ scharfkantigen Koppelgliedes hingewiesen werden.

Auch aus der DE-A- 14 05 995 ist ein anderes Koppelglied einer derartigen Scheibenwischervorrichtung bekannt. Dieses Koppelglied hat als Basis einen Träger, der aus Press-Kunstharz hergestellt ist. An dieser Trägerplatte, die den Rücken des Koppelgliedes bildet, sind zwei Gelenkbolzen befestigt, und zwischen den beiden Gelenkbolzen ist ein nach unten weisender Überfallbügel angeschraubt. Dieses Koppelglied ist unter Umständen nicht so scharfkantig ausgebildet, so daß die auf die Scharfkantigkeit zurückzuführenden Nachteile des Koppelgliedes aus der DE-A-39 17 483 evtl. nicht zum Tragen kommen. Die anderen geschilderten Merkmale treffen jedoch auch für dieses Koppelglied zu.

Aufgabe der Erfindung ist es, ein Koppelglied der eingangs beschriebenen Art, siehe auch DE-A-3 340 449 so weiterzuentwickeln, daß es mit wenig Aufwand funktionssicher mit dem weitverbreiteten Wischblatt-Typ verbindbar ist, bei welchem ein Befestigungsbolzen in einem offenen Bereich des Wischblatt-Tragbügels quer zur Längsrichtung des Wischblattes befestigt ist, in welchem die Seitenwangen des Wischblatt-Tragbügels in einem bestimmten Abstand voneinander und parallel zueinander verlaufen.

Erfindungsgemäß wird die Aufgabe durch ein Koppelglied nach der DE-A-3 340 449 mit den Merkmalen des Anspruchs 1 gelöst. Dadurch, daß der Verbindungsteil des einstückigen Grundkörpers des Koppelgliedes zum Aufrasten auf den sich zwischen den parallelen Seitenwangen des Wischblatt-Tragbügels erstreckenden Befestigungsbolzen ausgebildet ist, ergibt sich der Vorteil, daß nunmehr ein Wischblatt dieses weitverbreiteten Typs bei einer Scheibenwischeranlage mit Koppelglied zwischen einem Wischarm und einem Steuerarm verwendbar ist. Auf speziell für derartige Scheibenwischeranlagen ausgebildete Wischblätter kann somit verzichtet werden. Weiterhin ergibt sich der Vorteil, daß der Wischblattwechsel gegenüber der bisher bekannten Art wesentlich vereinfacht ist und trotzdem die volle Funktionssicherheit des Scheibenwischers gewährleistet ist. Bei Verwendung eines erfindungsgemäßen Koppelgliedes tritt also eine Möglichkeit zur Verringerung der Typenvielfalt bei Wischblättern ein, welche außerdem von Vorteil in bezug auf den Transport und die Lagerhaltung von Wischblättern ist.

Vorteilhafte Ausgestaltungen der Erfindung sind in den Unteransprüchen 2 bis 14 angegeben.

Durch eine Ausbildung der parallelen Seitenwände des Verbindungsteiles gemäß Anspruch 2 wird eine gute seitliche Führung des Wischblatt-Tragbügels erreicht, da relativ große Flächen zur seitlichen Führung zur Verfügung stehen. Durch die Anordnung der nach unten offenen Rastaufnahme für den Befestigungsbolzen des Wischblatt-Tragbügels quer zwischen dessen Seitenwangen müssen die Seitenwände keinerlei Rastfunktion ausüben, sie haben also lediglich eine statische Funktion für das Koppelglied und die Funktion der seitlichen Führung des Wischblattes. Eine einwandfreie Rastfunktion des Verbindungsteiles wird dadurch gewährleistet, daß gemäß Anspruch 3 die nach unten offene Rastaufnahme von zwei einander gegenüberliegenden Rastfedern gebildet wird, die sich zwischen den beiden Seitenwänden vom Rückenteil ausgehend nach unten erstrecken und mit entsprechenden gegenüberliegenden Rastansätzen ausgestattet sind. Diese Rastfedern sind zwischen den beiden Seitenwänden frei beweglich. Die im Bereich der Rastaufnahme in die Seitenwände eingebrachten nach unten randoffenen Ausnehmungen verringern die Führungsfläche der Seitenwände nur geringfügig, so daß trotz dieser Unterbrechung eine einwandfreie Führung des Wischblattes am Verbindungsteil gewährleistet ist. Bevorzugt wird dabei eine Ausführung gemäß Anspruch 4, wobei die oberen Ränder der Ausnehmungen in den Seitenwänden zur Anlage am Befestigungsbolzen des Wischblatt-Tragbügels bestimmt sind.

Diese beiden Anlagestellen weisen den größtmöglichen Abstand voneinander auf, so daß die Führung des Wischblattes am Verbindungsteil des Koppelgliedes dadurch noch weiter verbessert wird. Um keine überhöhten Ansprüche an die Fertigungsgenauigkeit der zu verwendenden Wischblätter stellen zu müssen, ist es von Vorteil, an den Außenseiten der Seitenwände des Verbindungsteiles des Koppelgliedes seitlich abstehende Führungsleisten oder federnde Abschnitte vorzusehen. Durch diese Maßnahme ist ein toleranzbedingtes seitliches Spiel zwischen dem Verbindungsteil und dem Tragbügel des Wischblattes ausgleichbar, so daß auch unter diesen Umständen eine einwandfreie seitliche Führung des Tragbügels an den Seitenwänden des Verbindungsteiles gewährleistet ist.

Ein weiterer bedeutender Vorteil ergibt sich bei einer Ausführung gemäß Anspruch 6, wonach der Gelenkbolzen zum Anlenken des Wischarmes an dem Koppelglied ein Zylinderbolzen und der Gelenkbolzen zum Anlenken des Steuerarmes ein Kugelbolzen ist. Durch diese Maßnahme werden mechanische Verspannungen in dem zu verschwenkenden System aus Wischarm, Steuerarm und Koppelglied vermieden, die insbesondere dann in diesem System entstehen würden, wenn die geometrischen Achsen der Wischerwelle und der Drehachse, auf welcher der Steuerarm befestigt ist, nicht exakt parallel zueinander ausgerichtet sind. Die erforderliche exakte Führung des Koppelgliedes wird dabei durch die Ausbildung des Gelenkstiftes zum Anlenken des Wischarmes als Zylinderstift gewährleistet. Durch eine Ausgestaltung des Koppelgliedes nach Anspruch 9, wonach der Verbindungsteil am Rand des Rückenteils angeordnet und der zylindrische Gelenkbolzen für den Wischarm annähernd zentrisch über diesem Verbindungsteil im Rückenteil befestigt ist, wird die exakte Führung des Koppelgliedes am Wischarm noch weiter verbessert, da kein seitlicher Versatz zwischen dem Anlenkpunkt des Wischarmes am Koppelglied und dem Anlenkpunkt des Wischblattes am Koppelglied besteht.

Eine stabile Befestigung der Gelenkbolzen wird dann erreicht, wenn die Gelenkbolzen einen Basisteil aufweisen, mit welchem sie im Rückenteil des Koppelgliedes befestigt sind. Besonders einfach und kostengünstig wird diese Befestigung, wenn die Gelenkbolzen mit ihrem Basisteil als Einlegeteil in dem Grundkörper eingegossen bzw. eingespritzt sind. Bevorzugt wird dabei eine Ausführung gemäß Anspruch 7, wonach die Gelenkbolzen am Basisteil von einem Sockel umgeben sind, der vom Rückenteil nach oben absteht. Diese Ausführung ermöglicht hohe Festigkeiten der Verbindung zwischen Grundkörper und Gelenkbolzen bei geringstmöglichem Materialeinsatz. Wenn dann außerdem diese Sockel gemäß Anspruch 8 zylindrisch ausgebildet sind, besteht die Möglichkeit diese mit einem Ringwülst oder einer Ringnut auszustatten, welche wiederum im Zusammenwirken mit einem entsprechenden Gegenstück des erforderlichen am Wischarm bzw. Steuerarm angebrachten Gelenkteiles als Abdichtung für das gebildete Schwenklager ausnutzbar ist. Diese Ausgestaltung kann auch dazu benutzt werden, das am Wischarm oder am Steuerarm befestigte Gelenkteil an dem zylindrischen Sockel so zu verrasten, daß es keiner weiteren Axialsicherung bedarf aber trotzdem eine Drehbewegung zwischen beiden Teilen möglich ist. Dadurch kann der Montageaufwand noch weiter verringert werden.

Bevorzugt wird eine Ausgestaltung gemäß Anspruch 10, wonach der Rand des Rückenteiles zumindest abschnittsweise nach unten umgebogen ist und an der Unterseite des Rückenteiles Versteifungsrippen vorgesehen sind. Dadurch wird zum einen die erforderliche mechanische Stabilität des Grundkörpers bzw. des Koppelgliedes bei relativ geringem Werstoffeinsatz gewährleistet, und zum anderen wird die Möglichkeit für die Gestaltung eines ansprechenden äußeren Anblickes des Koppelgliedes geschaffen. Da der umgebogene Rand und die Versteifungsrippen in Richtung auf die zu reinigende Scheibe weisen, sind sie für einen Betrachter von außen her nicht sichtbar. Außerdem können so die Versteifungsrippen und er umgebogene Rand nicht nachteilig auf die Windanströmverhältnisse an der Scheibenwischervorrichtung wirken.

Besonders kostengünstig ist die Herstellung eines Koppelgliedes, welches entsprechend den Merkmalen der Ansprüche 11 bis 13 ausgestaltet ist. Dementsprechend ist am Rückenteil des Koppelgliedes, insbesondere an dessen Unterseite, ein Gehäuse für eine Spritzeinrichtung zur Abgabe von Waschflüssigkeit auf die zu wischende Scheibe angebracht, wobei ein einstückig angeformtes Gehäuse besonders bevorzugt wird. Dieses Gehäuse kann durch entsprechende Spritzdüsen komplettiert werden. Es wird empfohlen, gemäß Anspruch 12 in eine entsprechend ausgebildete Aufnahmeöffnung eine Spritzkugel einzusetzen, welche wegen ihrer räumlichen Verschwenkbarkeit eine Einstellung der Richtung des Spritzstrahles ermöglicht. Noch besser ist es aber direkt in die Wand des Gehäuses sofort bei der Herstellung des Grundkörpers des Koppelgliedes eine Spritzöffnung, insbesondere eine Breitstrahlspritzöffnung einzuformen. Gemäß Anspruch 14 ist dabei das Koppelglied oder zumindest der Grundkörper und, wenn gewünscht, zusätzlich das Gehäuse für die Spritzeinrichtung als einstückiges Gußteil, insbesondere Druckgußteil, aus einem dafür geeigneten Metall bzw. einer Metallegierung hergestellt. Noch günstiger erscheint es jedoch, dieses genannte Gebilde als einstückiges Spritzgußteil aus einem geeigneten formstabilen Kunststoff herzustellen.

Anhand der Zeichnung wird nachfolgend ein Ausführungsbeispiel näher beschrieben.

Es zeigen
- Fig. 1: ein System bestehend aus Wischarm, Steuerarm und Koppelglied,
- Fig. 2: eine Seitenansicht des Koppelgliedes in teilweise geschnittener Darstellung,
- Fig. 3: eine Ansicht des Koppelgliedes aus Fig. 2 in Blickrichtung von unten,
- Fig. 4: einen Schnitt entlang der Linie IV-IV in Fig. 2 und
- Fig. 5: eine Ansicht des Koppelgliedes von Fig. 2 in Blickrichtung des Pfeiles A.

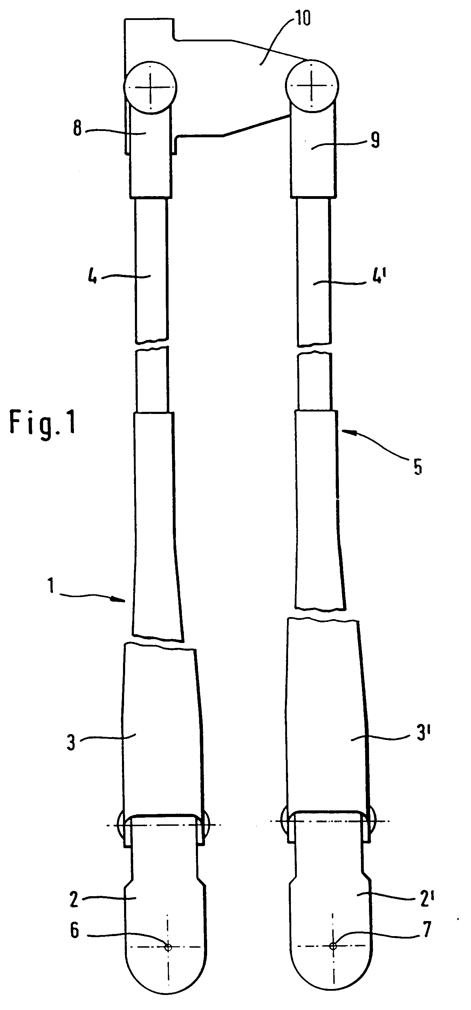

In Fig. 1 ist mit 1 ein Wischarm einer Scheibenwischeranlage bezeichnet, der in bekannter Weise aus einem Befestigungsteil 2 und einem schwenkbar an dem Befestigungsteil 2 gelagerten Gelenkteil 3 besteht, wobei mit dem Gelenkteil 3 eine Wischstange 4 fest verbunden ist. Ein insgesamt mit 5 bezeichneter Steuerarm ist in gleicher Weise aufgebaut wie der Wischarm 1. Er besteht aus einem Befestigungsteil 2', einem schwenkbar an diesem Befestigungsteil 2' gelagerten Gelenkteil 3', an welchem die Steuerstange 4' befestigt ist. Der Wischarm 1 ist auf einer um ihre Drehachse 6 pendelnd antreibbare Wischerwelle befestigt. Die Wischerwelle selbst ist in Fig. 1 nicht sichtbar. Ihre Drehachse 6 verläuft senkrecht zur Ebene des Zeichnungsblattes. Der Steuerarm 5 ist auf einer drehbaren Achse befestigt, die in Fig. 1 ebenfalls nicht sichtbar ist und deren Drehachse 7 ebenfalls senkrecht zur Ebene des Zeichnungsblattes verläuft. Am freien Ende des Wischarmes 1 ist an der geraden Wischstange 4 ein Gelenkteil 8 zum schwenkbaren Verbinden des Wischarmes 1 mit dem Koppelglied 10 befestigt. Der in einem Abstand seitlich neben dem Wischarm 1 angeordnete Steuerarm 5 trägt am freien Ende der geraden Steuerstange 4' ebenfalls ein Gelenkteil 9 zum schwenkbaren Verbinden des Steuerarmes 5 mit dem Koppelglied 10. Das in Fig. 1 gezeigte System, bestehend aus Wischarm 1, Steuerarm 5 und Koppelglied 10 bildet ein Parallelogramm, welches beim Betrieb der Scheibenwischeranlage seine Form verändert. Das Koppelglied 10 behält dabei im wesentlichen seine waagerechte Ausrichtung bei, so daß ein an dem Koppelglied 10 befestigtes Wischblatt (in der Zeichnung nicht dargestellt) im wesentlichen parallel zu sich selbst verschwenkt wird.

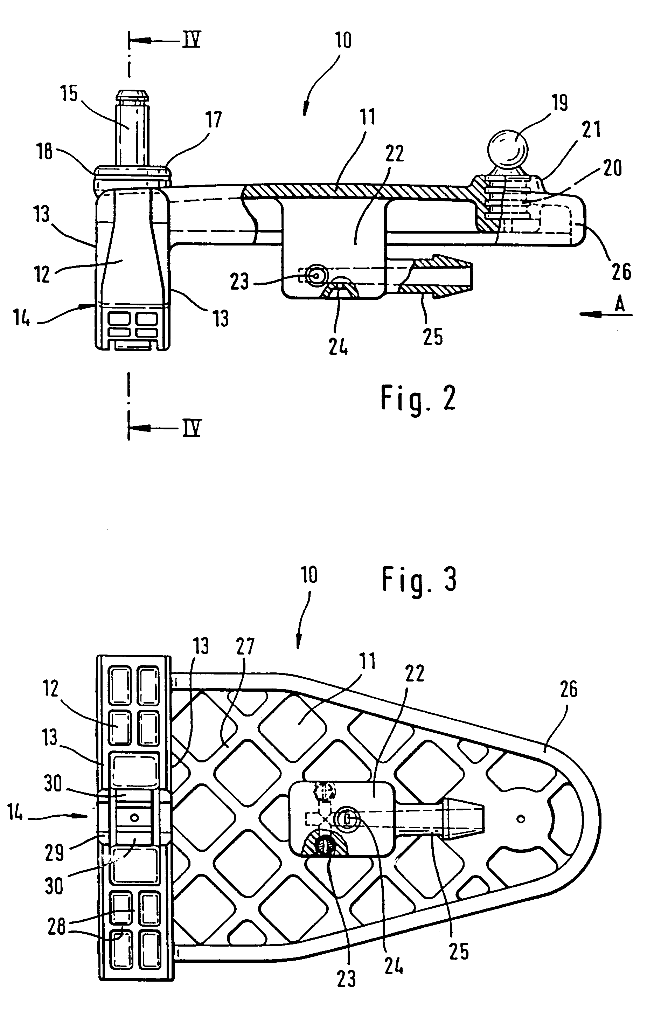

Einzelheiten des Koppelgliedes sind aus den Fig. 2 bis 5 ersichtlich. Fig. 2 zeigt, daß das Koppelglied 10 einen Grundkörper aufweist, der im wesentlichen aus einem Rückenteil 11 und einem Verbindungsteil 12 zum Verbinden mit einem Wischblatt besteht. Der Verbindungsteil 12 steht vom Rückenteil 11 in Richtung auf die zu wischende Scheibe ab, wobei im Rahmen dieser Anmeldung die auf die zu wischende Scheibe gerichtete Richtung auch mit "unten" bezeichnet wird. Der Verbindungsteil 12 besitzt zwei in einem Abstand voneinander angeordnete und parallel zueinander ausgerichtete Seitenwände 13, zwischen denen quer verlaufend eine nach unten offene Aufnahme 14 für den Befestigungsbolzen des Wischblattes angeordnet ist.

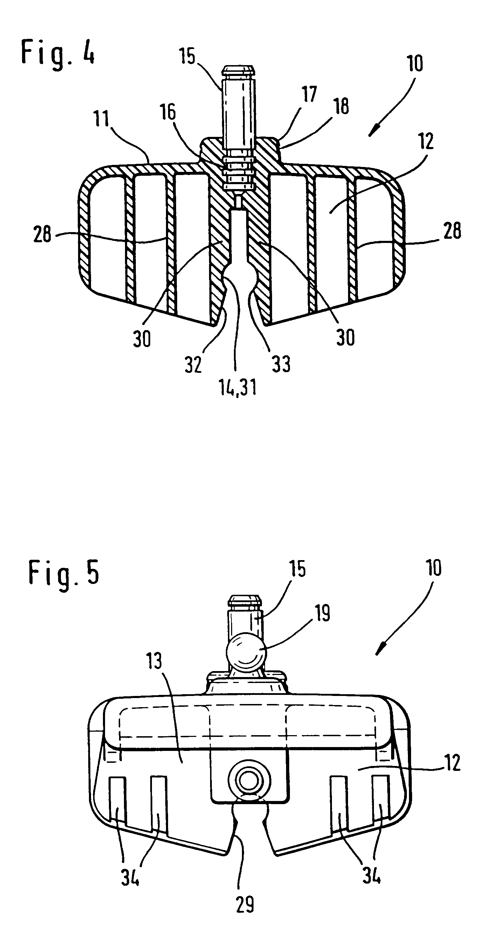

Der Verbindungsteil 12 ist bei dem vorliegenden Ausführungsbeispiel mit Bezug auf Fig. 2 am linken äußeren Rand des Rückenteiles 11 angeformt. Mittig über dem Verbindungsteil 12 ist im Rücken 11 des Koppelgliedes 10 ein zylindrischer Gelenkbolzen 15 mit seinem Basisteil 16 (Fig. 4) befestigt. An seinem Basisteil 16 ist der Gelenkbolzen 15 von einem zylindrischen Sockel 17 umgeben, der einen Ringwulst bzw. eine Ringnut 18 aufweist. Der Ringwulst bzw. die Ringnut 18 ist so ausgebildet, daß sie im Zusammenwirken mit einem entsprechenden Gegenstück an dem Gelenkteil 8 des Wischarmes 1 (Fig. 1) eine Abdichtung der zylindrischen Lagerfläche des Gelenkbolzens 15 gegen Umwelteinflüsse bewirkt.

In der Nähe des in Fig. 2 rechten Randes des Rückenteiles 11 ist als Gelenkbolzen 19 ein Kugelbolzen zum gelenkigen Verbinden des Koppelgliedes 10 mit dem Steuerarm 5 befestigt. Der Kugelbolzen besitzt ein Basisteil 20, mit welchem er im Rückenteil befestigt ist und welcher von einem Sockel 21 umgeben ist.

In dem Abstand zwischen den beiden Gelenkbolzen 15, 19 ist an die Unterseite des Rückenteiles 11 ein Gehäuse 22 für eine Spritzeinrichtung zur Abgabe von Waschflüssigkeit auf die zu reinigende Scheibe angeformt. Dieses Gehäuse 22 besitzt Aufnahmeöffnungen, in welcher jeweils eine an sich bekannte Spritzkugel 23 räumlich schwenkbar angeordnet ist. In die untere Wand des Gehäuses 22 ist direkt eine Breitstrahldüsenöffnung 24 eingeformt. Das Gehäuse 22 besitzt außerdem einen angeformten Anschlußstutzen 25 für den Anschluß einer nicht dargestellten Waschflüssigkeitsleitung.

Letztendlich ist aus Fig. 2 noch ersichtlich, daß der Rand 26 des Rückenteiles 11 zumindest abschnittsweise in Richtung auf die zu reinigende Scheibe, d. h. nach unten, umgebogen ist. Aus der Darstellung in Fig. 3 ist ersichtlich, wie der Verbindungsteil 12 am linken Rand des Rückenteiles 11 angeordnet ist. Der nach unten umgebogene Rand 26 erstreckt sich um den gesamten Rückenteil, ausgenommen die linke Seite, an welcher der Verbindungsteil 12 angeordnet ist. An der Unterseite des Rückenteiles 11 sind außer den Gehäuse 22 für die Spritzeinrichtung eine Anzahl sich gegenseitig kreuzender Versteifungsrippen 27 zu erkennen, welche für eine hohe Stabilität des Koppelgliedes 10 sorgen. Es ist noch zu erkennen, daß im Bereich des Verbindungsteiles 12 zwischen dessen parallelen Seitenwänden 13 mehrere Stabilisierungswände 28 in Längs- und Querrichtung angeordnet sind. Im Bereich der Aufnahme 14 für den Befestigungsbolzen des Wischblattes sind die nach unten randoffenen Ausnehmungen 29 in den Seitenwänden 13 zu sehen. Die beiden Federzungen 30, welche sich zwischen den Seitenwänden 13 erstrecken und vom Rückenteil 11 ausgehen, stehen nicht in Verbindung mit den Seitenwänden 13. Dadurch ist deren freie federnde Auslenkbarkeit gewährleistet.

Die spezielle Ausbildung der Federzungen 30 ist besonders gut aus Fig. 4 ersichtlich. Es ist zu sehen, daß die in einem Abstand voneinander und parallel zueinander verlaufenden Federzungen 30 einstückig an dem Rückenteil 11 des Grundkörpers angeformt sind und sich von diesem aus bis in Höhe des unteren Randes der Seitenwände 13 erstrecken. In einem bestimmten Abstand vom unteren Rand sind gegenüberliegend in die Federzungen 30 kreisbogenförmige Ausnehmungen 31 eingebracht, die dem Durchmesser des Befestigungsbolzens des Wischblattes angepaßt sind. Von den kreisbogenförmigen Ausnehmungen 31 erstreckt sich jeweils eine Auflaufschräge 32 bis zum unteren Rand der Federzunge, so daß an jeder Federzunge 30 ein Rastvorsprung 33 ausgebildet ist. Die Aufnahme 14 ist somit als eine nach unten offene Rastaufnahme ausgebildet.

In Fig. 5 ist gezeigt, daß die nach unten randoffenen Ausnehmungen 29 in den Seitenwänden 13 des Verbindungsteiles 12 im wesentlichen der Form der Rastaufnahme 14, 31, 33 angepaßt ist. Der obere Rand der Ausnehmungen ist dabei derartig kreisbogenförmig ausgebildet, daß er als Auflage für den Befestigungsbolzen des Wischblattes dient. Die schmalste Stelle der Ausnehmungen 29 ist dabei immer noch so breit, daß der Befestigungsbolzen des Wischblattes durch diese Stelle hindurchgedrückt werden kann. In Fig. 5 sind außerdem an der sichtbaren Seitenwand 13 des Verbindungsteiles 12 noch vier senkrecht verlaufende federnde Abschnitte 34 zu erkennen, welche seitlich von der Seitenwand 13 abstehen. Die dahinterliegende Seitenwand 13, welche in der Fig. 5 nicht sichtbar ist, ist in gleicher Weise ausgestattet. Die federnden Abschnitte 34 liegen im montierten Zustand des Wischblattes an den Innenseiten der parallelen Seitenwangen des Tragbügels an und sorgen für einen Ausgleich eines evtl. vorhandenen seitlichen Spieles zwischen den Seitenwangen des Tragbügels und den Seitenwänden 13 des Verbindungsteiles 12.

Die Gelenkbolzen 15 und 19 sind in an sich bekannter Weise mit den Gelenkteilen 8 und 9 des Wischarmes bzw. des Steuerarmes zu verbinden; dieser Vorgang bedarf keiner näheren Erläuterung. Zum Verbinden eines Wischblattes mit dem Koppelglied 10 wird mit einer Relativbewegung der Verbindungsteil 12 von oben her in den oben offenen Bereich des Wischblatt-Tragbügels derartig eingesetzt, daß die Seitenwände 13 des Verbindungsteiles 12 zwischen die parallelen Seitenwangen des Wischblatt-Tragbügels gelangen und der Befestigungsbolzen des Tragbügels zwischen die beiden gegenüberliegenden Auflaufschrägen 32 der Federzungen 30 eingeführt wird. Dabei gleiten die Auflaufschrägen 32 auf den Umfang des Befestigungsbolzens auf, und die Federzungen 30 werden federelastisch aufgespreizt. Bei Erreichen der Endposition, in welcher die oberen Ränder der Ausnehmungen 29 in den Seitenwänden 13 auf dem Umfang des Befestigungsbolzens aufliegen, sind auch die Rastvorsprünge 33 an den Federzungen 30 überwunden, so daß die kreisbogenförmigen Ausnehmungen 31 zur Anlage an den Umfang des Befestigungsbolzens gelangen. Die Rastvorsprünge 33 sorgen für einen ausreichenden Halt des Wischblattes am Koppelglied.

### Bezugszeichenliste

- 1: Wischarm
- 2: Befestigungsteil
- 2': Befestigungsteil
- 3: Gelenkteil
- 3': Gelenkteil
- 4: Wischstange
- 4': Steuerstange
- 5: Steuerarm
- 6: Drehachse
- 7: Drehachse
- 8: Gelenkteil
- 9: Gelenkteil
- 10: Koppelglied
- 11: Rückenteil
- 12: Verbindungsteil
- 13: Seitenwand
- 14: Aufnahme
- 15: Gelenkbolzen
- 16: Basisteil
- 17: Sockel
- 18: Ringwulst bzw. Ringnut
- 19: Gelenkbolzen
- 20: Basisteil
- 21: Sockel
- 22: Gehäuse
- 23: Spritzkugel
- 24: Breitstrahl-Spritzöffnung
- 25: Anschlußstutzen
- 26: Rand
- 27: Versteifungsrippe
- 28: Stabilisierungswand
- 29: Ausnehmung
- 30: Federzunge
- 31: Ausnehmung
- 32: Auflaufschräge
- 33: Rastvorsprung
- 34: federnder Abschnitt

## Patentansprüche

1. Koppelglied für eine Scheibenwischeranlage, insbesondere eines Kraftfahrzeuges, an welches das freie Ende eines auf einer pendelnd antreibbaren Wischerwelle befestigten Wischarmes (1) und das freie Ende eines auf einer drehbaren Achse befestigten Steuerarmes (5) in einem Abstand voneinander anlenkbar sind und mit welchem ein Wischblatt in Richtung auf die zu wischende Scheibe schwenkbar zu verbinden ist, wobei das Koppelglied (10) einen Grundkörper mit einem Rückenteil (11) und mit einem in Richtung auf die zu wischende Scheibe von dem Rückenteil (11) abstehenden Verbindungsteil (12) für das Wischblatt aufweist und wobei an dem Rückenteil (11) ein Verbindungselement, insbesondere ein Gelenkbolzen (15), zum Anlenken des Wischarmes (1) und ein Verbindungselement, insbesondere ein Gelenkbolzen (19), zum Anlenken des Steuerarmes (5) angebracht sind, dadurch **gekennzeichnet**, daß der Verbindungsteil (12) und zu dem Verbindungsteil (12) gehörende Mittel zur rastenden Aufnahme eines sich zwischen den parallelen Seitenwänden des Wischblatt-Tragbügels erstreckenden Befestigungsbolzens einstückig mit dem Grundkörper des Koppelgliedes gefertigt sind.

2. Koppelglied nach Anspruch 1, **dadurch gekennzeichnet**, daß der Verbindungsteil (12) für das Wischblatt zwei parallele, sich in Längsrichtung des Wischblatt-Tragbügels erstreckende Seitenwände (13) aufweist, die zur seitlichen Führung an den parallelen Seitenwangen des Wischblatt-Tragbügels, zwischen denen sich der Befestigungsbolzen erstreckt, ausgebildet sind und daß der Verbindungsteil (12) eine sich quer zu seinen Seitenwänden (13) erstreckende nach unten, d. h. in Richtung auf die zu wischende Scheibe, offene Rastaufnahme (14, 31, 32, 33) für den Befestigungsbolzen des Wischblatt-Tragbügels aufweist.

3. Koppelglied nach Anspruch 2, **dadurch gekennzeichnet**, daß sich zwischen den Seitenwänden (13) des Verbindungsteiles (12) vom Rückenteil (11) ausgehend zwei Rastfedern (30) mit einander gegenüberliegenden Rastvorsprüngen (33) nach unten ertrecken und die Rastaufnahme (14, 31, 32, 33) bilden und daß im Bereich der nach unten offenen Rastaufnahme in den Seitenwänden (13) nach unten randoffene Ausnehmungen (29) entsprechender Größe vorgesehen sind.

4. Koppelglied nach Anspruch 3, **dadurch gekennzeichnet**, daß die oberen Ränder der Ausnehmungen (29) in den Seitenwänden (13) zur Anlage am Befestigungsbolzen des Wischblatt-Tragbügels bestimmt sind.

5. Koppelglied nach einem der Ansprüche 2 bis 4, **dadurch gekennzeichnet**, daß die Seitenwände (13) des Verbindungsteiles (12) seitlich abstehende Führungsleisten oder federnde Abschnitte (34) aufweisen.

6. Koppelglied nach einem der vorhergehenden Ansprüche, **dadurch gekennzeichnet**, daß der Gelenkbolzen (15) zum Anlenken des Wischarmes (1) ein Zylinderbolzen und der Gelenkbolzen (19) zum Anlenken des Steuerarmes (5) ein Kugelbolzen ist und daß beide Gelenkbolzen (15, 19) mit einem Basisteil (16, 20) in dem Rückenteil (11) des Koppelgliedes (10) befestigt, vorzugsweise als Einlegeteil von dem Material des Grundkörpers umgossen sind.

7. Koppelglied nach einem der vorhergehenden Ansprüche, **dadurch gekennzeichnet**, daß der Gelenkbolzen (15) zum Anlenken des Wischarmes (1) und/oder der Gelenkbolzen (19) zum Anlenken des Steuerarmes (5) an seinem Basisteil (16, 20) von einem vom Rücken (11) nach oben abstehenden Sockel (17, 21) umgeben ist.

8. Koppelglied nach Anspruch 7, **dadurch gekennzeichnet**, daß der Sockel (17, 21) zylindrisch geformt ist und an seinem Umfang einen Ringwulst oder eine Ringnut (18) zum Zusammenwirken mit einem entsprechend ausgebildeten Gegenmittel eines am Ende des Wischerarmes (1) und/oder des Steuerarmes (5) befestigten Gelenkteiles (8, 9) zum Anlenken an den Gelenkbolzen (15, 19) aufweist.

9. Koppelglied nach einem der vorhergehenden Ansprüche, **dadurch gekennzeichnet**, daß der Verbindungsteil (12) an einem Rand des Rückenteils (11) angeordnet und der Gelenkbolzen (15) zum Anlenken des Wischarmes (1) zumindest annähernd zentrisch über dem Verbindungsteil (12) angebracht ist.

10. Koppelglied nach einem der vorhergehenden Ansprüche, **dadurch gekennzeichnet**, daß der äußere Rand (26) des Rückenteiles (11) zumindest in Abschnitten nach unten in Richtung auf die zu wischende Scheibe umgebogen ist und daß der Rückenteil (11) an seiner Unterseite mit Versteifungsrippen (27) ausgestattet ist.

11. Koppelglied nach einem der vorhergehenden Ansprüche, dadurch **gekennzeichnet**, daß an den Rückenteil (11), insbesondere an dessen Unterseite, ein Gehäuse (22) für eine Spritzeinrichtung zur Abgabe von Waschflüssigkeit auf die zu reinigende Scheibe angebracht ist, insbesondere einstückig angeformt ist.

12. Koppelglied nach Anspruch 11, **dadurch gekennzeichnet**, daß in einer Wand des Gehäuses (22) für eine Spritzeinrichtung eine kugelige Aufnahmeöffnung vorhanden ist, in welcher eine Spritzkugel (23) räumlich verschwenkbar angeordnet ist.

13. Koppelglied nach Anspruch 11, **dadurch gekennzeichnet**, daß in eine Wand des Gehäuses (22) für eine Spritzeinrichtung unmittelbar eine Spritzöffnung für die Waschflüssigkeit, inbesondere ein Breitstrahl-Spritzöffnung (24) eingeformt ist.

14. Koppelglied nach einem der vorhergehenden Ansprüche, **dadurch gekennzeichnet**, daß zumindest der Grundkörper oder zumindest der Grundkörper und das Gehäuse (22) für die Spritzeinrichtung als einstückiges Gußteil, insbesondere Druckgußteil, aus Metall oder als einstückiges Spritzgußteil aus formstabilem Kunststoff hergestellt ist.

## Claims

1. A coupling member for a windscreen wiper device, more particularly of a motor vehicle, to which the free end of a wiper arm (1) secured on a wiper shaft, which can be driven in suspended fashions and the free end of a control arm (5) secured to a rotatable axle can be articulatedly connected at a distance from one another and with which a wiper blade is to be connected so as to pivot in the direction of the windscreen which is to be wiped, wherein the coupling member (10) comprises a base element with a rear section (11) and with a connecting section (12) projecting from the rear section (11) in the direction of the windscreen which is to be wiped, and wherein a connecting element, more particularly a hinge bolt (15), for the hinge mounting of the wiper arm (1) and a connecting element, more particularly a hinge bolt (19), for the hinge mounting of the control arm (5), are fitted to the rear section (11), characterised in that the connecting section (12) and means belonging to the connecting section (12) for the locking accommodation of a securing bolt extending between the parallel side walls of the wiper blade support bracket are integrally manufactured with the base element of the coupling member.

2. A coupling member according to claim 1, characterised in that the connecting section (12) for the wiper blade comprises two parallel side walls (13), which extend in the longitudinal direction of the wiper blade support bracket and are constructed for lateral guidance on the parallel side walls of the wiper blade support bracket, between which the securing bolt extends, and the connecting section (12) comprises a locking recess (14, 31, 32, 33) for the securing bolt of the wiper blade support bracket, which recess extends transversely to its side walls (13) and is open at the bottom, i.e. in the direction of the windscreen which is to be wiped.

3. A coupling member according to claim 2, characterised in that two locking springs (30) with opposing locking projections (33) extend downwards from the rear section (11) between the side walls (13) of the connecting section (12) and form the locking recess (14, 31, 32, 33), and recesses (29) of a corresponding size which are peripherally open at the bottom are provided in the region of the locking recess open at the bottom in the side walls (13).

4. A coupling member according to claim 3, characterised in that the upper edges of the recesses (29) in the side walls (13) are designed to abut against the securing bolt of the wiper blade support bracket.

5. A coupling member according to one of claims 2 to 4, characterised in that the side walls (13) of the connecting section (12) comprise laterally projecting guide strips or resilient sections (34).

6. A coupling member according to one of the preceding claims, characterised in that the hinge bolt (15) for the hinge mounting of the wiper arm (1) is a cylinder bolt and the hinge bolt (19) for the hinge mounting of the control arm (5) is a ball bolt, and both hinge bolts (15, 19) are secured with a base section (16, 20) in the rear section (11) of the coupling member (10) and are preferably cast in place as a laid-in element by the material of the base element.

7. A coupling member according to one of the preceding claims, characterised in that the hinge bolt (15) for the hinge mounting of the wiper arm (1) and/or the hinge bolt (19) for the hinge mounting of the control arm (5) is enclosed at its base section (16, 20) by a socket (17, 21) projecting upwards from the rear (11).

8. A coupling member according to claim 7, characterised in that the socket (17, 21) is cylindrical in shape and on its circumference comprises an annular bead or an annular groove (18) for cooperating with a correspondingly designed counter element of a hinge section (8, 9) secured to the end of the wiper arm (1) and/or the control arm (5) for articulation on the hinge bolt (15, 19).

9. A coupling member according to one of the preceding claims, characterised in that the connecting section (12) is arranged on an edge of the rear section (11) and the hinge bolt (15) for the hinge mounting of the wiper arm (1) is fitted at least approximately centrally above the connecting section (12).

10. A coupling member according to one of the preceding claims, characterised in that the outer edge (26) of the rear section (11) is bent downwards at least in sections in the direction of the windscreen which is to be wiped and the rear section (11) is provided on its underside with reinforcing ribs (27).

11. A coupling member according to one of the preceding claims, characterised in that a housing (22) for a spray device for releasing washing fluid onto the windscreen which is to be cleaned is fitted, more particularly integrally formed, onto the rear section (11), more particularly onto the underside thereof.

12. A coupling member according to claim 11, characterised in that a spherical receiving aperture is provided in a wall of the housing (22) for a spray device, in which receiving aperture a spray ball (23) is arranged so as to pivot three-dimensionally.

13. A coupling member according to claim 11, characterised in that a spray aperture for the washing fluid, more particularly a wide jet spray aperture (24) is formed directly in a wall of the housing (22) for a spray device.

14. A coupling member according to one of the preceding claims, characterised in that at least the base element or at least the base element and the housing (22) for the spray device is manufactured as an integral cast part, more particularly a die cast part, made of metal or as an integral injection moulded part made of inherently stable plastics material.

## Revendications

1. Organe d'accouplement pour essuie-glace, notamment de véhicule automobile, sur lequel l'extrémité libre d'un bras d'essuie-glace (1) fixé sur un arbre d'essuie-glace pouvant être entraîné d'une manière oscillante et l'extrémité libre d'un bras de commande (5) fixé sur un axe rotatif peuvent être articulés à distance l'un de l'autre, et dont un balai d'essuie-glace doit être rendu solidaire de manière à osciller en étant dirigé vers la glace à nettoyer, l'organe d'accouplement (10) comportant un corps de base présentant une partie de dos (11) et une partie de liaison (12) prévue pour le balai d'essuie-glace et se dressant à partir de la partie de dos en direction de la glace à nettoyer, tandis qu'un élément de liaison, notamment un axe d'articulation (15), servant au montage articulé du bras d'essuie-glace (1) et un élément de liaison, notamment un axe d'articulation (19), servant au montage articulé du bras de commande (5) sont montés sur la partie de dos (11), caractérisé en ce que la partie de liaison (12) et des moyens faisant parties de la partie de liaison (12) et servant à loger avec enclenchement un axe de fixation s'étendant entre les parois latérales parallèles de l'étrier de support de balai d'essuie-glace sont réalisés d'un seul tenant avec le corps de base de l'organe d'accouplement.

2. Organe d'accouplement suivant la revendication 1, caractérisé en ce que la partie de liaison (12) prévue pour le balai d'essuie-glace comporte deux parois latérales (13) parallèles qui sont orientées suivant la direction longitudinale de l'étrier de support de balai d'essuie-glace et qui sont agencées pour un guidage transversal sur les joues latérales parallèles de l'étrier de support entre lesquelles l'axe de fixation s'étend et en ce que la partie de liaison (12) comporte un logement d'enclenchement (14, 31, 32, 33) qui est destiné à l'axe de fixation de l'étrier de support de balai d'essuie-glace et qui s'étend transversalement aux parois latérales (13) et s'ouvre vers le bas, c'est-à-dire en direction de la glace à nettoyer.

3. Organe d'accouplement suivant la revendication 2, caractérisé en ce qu'entre les parois latérales (13) de la partie de liaison (12) et en partant de là partie de dos (11), deux ressorts d'enclenchement (30) comportant des saillies d'enclenchement (33) se faisant face s'étendent vers le bas et forment le logement d'enclenchement (14, 31, 32, 33) et en ce que des encoches (29) d'une grandeur correspondante et ouvertes sur le bord vers le bas sont prévues dans les parois latérales (13) dans la zone du logement d'enclenchement ouvert vers le bas.

4. Organe d'accouplement suivant la revendication 3, caractérisé en ce que les bords supérieurs des encoches (29) ménagées dans les parois latérales (13) sont déterminés pour venir en appui sur l'axe de fixation de l'étrier de support de balai d'essuie-glace.

5. Organe d'accouplement suivant l'une des revendications 2 à 4, caractérisé en ce que les parois latérales (13) de la partie de liaison (12) comportent des sections (34) à comportement élastique ou des nervures de guidage se dressant transversalement.

6. Organe d'accouplement suivant l'une des revendications précédentes, caractérisé en ce que l'axe d'articulation (15) servant au montage articulé du bras d'essuie-glace (1) est un axe cylindrique et l'axe d'articulation (19) servant au montage articulé du bras de commande (5) est un axe à rotule et en ce que les deux axes d'articulation (15, 19) sont fixés, par une partie de base (16, 20), dans la partie de dos (11) de l'organe d'accouplement (10), de préférence en étant entourés au moulage, sous forme d'une partie encastrée, par la matière du corps de base.

7. Organe d'accouplement suivant l'une des revendications précédentes, caractérisé en ce que l'axe d'articulation (15) servant au montage articulé du bras d'essuie-glace (1) et/ou l'axe d'articulation (19) servant au montage articulé du bras de commande (5) sont entourés, à l'endroit de leur partie de base (16, 20), par un bossage (17, 21) se dressant vers le haut à partir de la partie de dos (11).

8. Organe d'accouplement suivant la revendication 7, caractérisé en ce que le bossage (17, 21) a une forme cylindrique et comporte, sur sa surface périphérique, une collerette annulaire ou une gorge annulaire (18) destinée à coopérer avec un moyen complémentaire, d'agencement correspondant, d'une partie d'articulation (8, 9) servant au montage articulé sur l'axe d'articulation (15, 19) et fixée à l'extrémité du bras d'essuie-glace (1) et/ou du bras de commande (5).

9. Organe d'accouplement suivant l'une des revendications précédentes, caractérisé en ce que la partie de liaison (12) est disposée sur un bord de la partie de dos (11) et l'axe d'articulation (15) servant au montage articulé du bras d'essuie-glace (1) est monté, au moins d'une manière approximativement centrée, sur la partie de liaison (12).

10. Organe d'accouplement suivant l'une des revendications précédentes, caractérisé en ce que le bord extérieur (26) de la partie de dos (11) est plié, au moins par endroits, vers le bas en direction de la glace à nettoyer et en ce que, sur sa face inférieure, la partie de dos (11) est pourvue de nervures de raidissement (27).

11. Organe d'accouplement suivant l'une des revendications précédentes, caractérisé en ce qu'un bloc (22) prévu pour un dispositif de projection servant à délivrer un liquide de lavage sur la glace à nettoyer est monté, notamment est venu d'un seul tenant au formage, sur la partie de dos (11), notamment sur sa face inférieure.

12. Organe d'accouplement suivant la revendication 11, caractérisé en ce que, dans une paroi du bloc (22) prévu pour un dispositif de projection, il est prévu une ouverture de logement sphérique dans laquelle une bille de projection (23) est disposée d'une manière orientable dans l'espace.

13. Organe d'accouplement suivant la revendication 11, caractérisé en ce qu'un orifice de projection prévu pour le liquide de lavage, notamment un orifice de projection à jet large (24), est ménagé au formage directement dans une paroi du bloc (22) prévu pour un dispositif de projection.

14. Organe d'accouplement suivant l'une des revendications précédentes, caractérisé en ce qu'au moins le corps de base ou au moins le corps de base et le bloc (22) prévu pour le dispositif de projection est réalisé sous forme d'une pièce moulée d'un seul tenant, notamment une pièce moulée sous pression, en métal ou sous forme d'une pièce moulée par injection d'un seul tenant en une matière plastique indéformable.
